(19) Europäisches Patentamt
European Patent Office
Office européen des brevets

(11) Veröffentlichungsnummer: **0 503 515 B1**

(12) **EUROPÄISCHE PATENTSCHRIFT**

(45) Veröffentlichungstag der Patentschrift: **12.10.94**

(51) Int. Cl.5: **G01P 3/48**

(21) Anmeldenummer: **92103941.8**

(22) Anmeldetag: **07.03.92**

(54) **Vorrichtung zur Drehzahlmessung.**

(30) Priorität: **15.03.91 DE 4108522**

(43) Veröffentlichungstag der Anmeldung:
**16.09.92 Patentblatt 92/38**

(45) Bekanntmachung des Hinweises auf die
Patenterteilung:
**12.10.94 Patentblatt 94/41**

(84) Benannte Vertragsstaaten:
**AT DE FR GB IT**

(56) Entgegenhaltungen:
**EP-A- 0 060 894
DE-A- 1 538 374
DE-A- 3 102 655**

(73) Patentinhaber: **GRUNDFOS INTERNATIONAL A/S
7-11, Poul Due Jensensvej
DK-8850 Bjerringbro (DK)**

(72) Erfinder: **Due Jensen, Niels
Pilevej 11
DK-8850 Bjerringbro (DK)**
Erfinder: **Poulsen, Preben
Holmstruphojvej 199
DK-8850 Bjerringbro (DK)**

(74) Vertreter: **Vollmann, Heiko, Dipl.-Ing. et al
Patentanwälte Wilcken & Vollmann,
Musterbahn 1
D-23552 Lübeck (DE)**

## Beschreibung

Die Erfindung betrifft eine Vorrichtung zur Drehzahlmessung einer Asynchronmaschine gemäß den im Oberbegriff des Anspruchs 1 aufgeführten Merkmalen.

Eine Vorrichtung bzw. Schaltungsanordnung zur Drehzahlmessung einer Asynchronmaschine ist in der DE 33 39 299 A1 beschrieben. Dort erfolgt die Drehzahlmessung anhand eines in einer Meßspule induzierten elektrischen Signals, wobei als Meßspule die Statorwicklung selbst dient. Dieses Signal wird über Filter so aufgearbeitet, daß schließlich ein charakteristisches Frequenzsignal verbleibt, anhand dessen die Drehzahl bestimmbar ist.

In der Praxis hat sich eine solche Schaltungsanordnung jedoch nicht bewährt, da die Ausfilterung eines der Drehzahl entsprechenden charakteristischen Frequenzsignals erhebliche Probleme bereitet. Im übrigen wird es als nachteilig empfunden, daß direkt an der Statorwicklung, also im Starkstrombereich gemessen werden muß, und zwar insbesondere aus sicherheitstechnischen Aspekten. Auch ist der für die elektronische Auswertung des Signals und zur sicheren Abkopplung vom Starkstrombereich erforderliche elektronische Schaltungsaufwand erheblich, wodurch der Einsatz einer solchen Schaltungsanordnung häufig unwirtschaftlich sein dürfte.

Aus der DE 31 02 655 A1 ist eine Anordnung bekannt, bei der Sonden im oder am Luftspalt der Maschine angeordnet sind, welche die zeitliche Änderung von Magnetfeldgrößen und damit die Drehzahl des Motors erfassen. Nachteilig bei dieser Anordnung ist der erhebliche technische Meßaufwand, insbesondere für die Installation der Sonden im oder am Luftspalt des Motors sowie die Auswerteelektronik. Im übrigen hat sich eine solche Anordnung schon aufgrund der recht empfindlichen Sonden als störanfällig erwiesen.

In der DE-OS 20 30 457 ist eine Vorrichtung zur Drehzahlüberwachung von Kreiseln unter Ausnutzung des Kreiselmotorstromes beschrieben, bei der eine frequenzabhängige Schaltung, insbesondere ein Schwingkreis vorgesehen ist, dessen Resonanzfrequenz so ausgelegt ist, daß dieser auf die drehzahlabhängige Läuferoberwelle des Motors anspricht. Mit dieser Vorrichtung ist lediglich eine Drehzahlüberwachung, nicht jedoch eine Drehzahlmessung über weite Bereiche möglich.

Ausgehend von dem aus der DE 31 02 655 A1 bekannten Stand der Technik liegt der Erfindung die Aufgabe zugrunde, eine gattungsgemäße Vorrichtung zur Drehzahlmessung einer Asynchronmaschine unter Vermeidung der vorgenannten Nachteile so auszubilden, daß mit möglichst geringem technischen Aufwand eine zuverlässige Bestimmung der Drehzahl über sämtliche in der Praxis relevanten Drehzahlbereiche erreicht wird.

Diese Aufgabe wird durch die in Anspruch 1 aufgeführten Merkmale gelöst.

Die erfindungsgemäße Lösung ermöglicht eine Drehzahlmessung mit einfachen technischen Mitteln, da insbesondere die Meßsignalauswertung mit geringem schaltungstechnischen Aufwand durchführbar ist, weil durch die Anordnung und Zusammenschaltung der Meßspulen ein wesentlicher Teil der für die Signalauswertung störenden Oberwellen unterdrückt und/oder eliminiert werden kann. Durch die erfindungsgemäße Anordnung und Schaltung einer Gruppe von Meßspulen können sowohl die Grundwelle als auch alle x-ten Oberwellen des Meßsignals unterdrückt werden, wobei x ungleich einem ganzzahligen Vielfachen der Anzahl (Zahl b) der zu einer Spulengruppe in Reihe geschalteten Meßspulen ist.

Ein so gewonnenes Meßsignal würde beispielsweise bei der Anordnung einer aus drei Spulen bestehenden Spulengruppe nur noch die 3., 6., 9., 12. usw. Oberwellen aufweisen. Ein solches Frequenzsignal ist zur Drehzahlerfassung mit geringem Schaltungsaufwand auswertbar, wobei letztlich die Frequenz einer ausgewählten Oberwelle gemessen und so die Fequenz bzw. Drehzahl des Rotors bestimmt wird.

Das durch Drehung des Rotors in der oder den Meßspulen induzierte Frequenzsignal besteht aus einer Grundwelle und zahlreichen Oberwellen. Bei Spulenanordnungen zur Drehzahlmessung nach dem Stand der Technik, wie sie eingangs beschrieben worden sind, wird in der Regel die Oberwelle der Ordnung des Frequenzsignals ausgewertet, die der Zahl der Rotornuten entspricht. Hierbei stellt sich regelmäßig auch aufgrund der Überlagerung des amplitudenmäßig wesentlich stärkeren Grundsignals das Problem, daß im Bereich des Nulldurchgangs des Grundsignals eine exakte Messung nicht oder nur mit enormen technischem Aufwand möglich ist. Der vorliegenden Erfindung liegt die Erkenntnis zugrunde, daß jedes Frequenzsignal, wie von Fourier bewiesen, in eine Addition von Sinus- und Kosinus-schwingungen zerlegbar ist. Die Erfindung nutzt dies dahingehend aus, daß die Schwingung der Ordnung (bzw. Vielfache der Ordnung) ausgewertet wird, deren Zahl um 1 größer oder kleiner als die Anzahl der Rotornuten ist. Diese Schwingung wird durch die erfindungsgemäße Spulenanordnung aus dem Frequenzsignal quasi herausgefiltert, sie weist das Nulldurchgangsproblem nicht auf, da sie eine im wesentlichen konstante Amplitude hat und kann daher ohne weitere Signalaufbearbeitung ausgezahlt werden und läßt so Rückschlüsse auf die tatsächliche Rotordrehzahl zu. Dazu steht die Zahl a der Rotornuten zu der Zahl b der Meßspulen in der Beziehung a = n • b

± 1, wobei n eine ganze Zahl und größer als 1 ist.

Eine weitere Elimination von Oberwellen kann dadurch erreicht werden, daß eine zweite Gruppe von Meßspulen symmetrisch zur ersten Gruppe angeordnet und mit dieser in Reihe geschaltet wird.

Besonders vorteilhaft ist es, wenn als Meßspulen Meßwicklungen verwendet werden, die in den Statornuten angeordnet sind. Solche Meßwicklungen können vorzugsweise zusammen mit den Statorwicklungen eingelegt werden.

Für die Meßwicklungen kann in der Regel ein im Vergleich zur Statorwicklung erheblich dünnerer Draht verwendet werden. Durch eine Erhöhung der Windungszahl kann die Signalstärke des induzierten Meßsignals vergrößert werden.

Vorteilhaft sind die Meßwicklungen jeweils in zwei Statornuten angeordnet, wobei es sich nicht um benachbarte Statornuten handeln muß. Gerade durch die Wahl dieser Nuten, also durch die Wahl des Winkels zwischen den in Längsrichtung des Motors verlaufenden Wicklungsteilen jeder Meßwicklung können weitere Oberwellen im Signal unterdrückt und andere verstärkt werden.

Eine weitere Elimination und/oder Unterdrückung von Oberwellen kann dadurch erfolgen, daß zwei (ggf. auch weitere) Gruppen von Meßspulen vorgesehen sind, die jeweils symmetrisch zur Motorachse angeordnet und in Reihe geschaltet sind. Bei dem oben angeführten Beispiel, mit drei Meßspulen je Gruppe kann durch Anordnung einer solchen zweiten Gruppe die bei der Meßwertauswertung besonders störende Oberwelle der dritten harmonischen Schwingung entfernt werden. Weitere Oberwellen können durch geschickte Wahl der Windungszahl, der Meßspulenzahl und des Winkels zwischen den in Längsrichtung des Motors verlaufenden Wicklungsteilen unterdrückt werden. Die Meßspulenzahl der einen Gruppe behägt dabei ein ganzzahliges Viel- oder Einfaches der Meßspulenzahl der anderen Gruppe.

Die günstigsten Werte für den Winkel zwischen den in Längsrichtung des Motors verlaufenden Wicklungsteilen der Meßwicklungen und ihre Windungzahl können durch mathematische Betrachtung bezw. Berechnung ermittelt werden.

Mit den aufgezeigten Maßnahmen ist es schließlich möglich, Grundwelle und Oberwellen im induzierten Signal so weit zu eliminieren bzw. zu unterdrücken, daß im wesentlichen nur eine charakteristische und leicht bestimmbare Oberwelle verbleibt, anhand deren Frequenzverlauf, der schaltungstechnisch ohne Probleme zu erfassen ist, die Rotorfrequenz bestimmt werden kann. Die hierzu erforderlichen elektronischen Schaltungen sind hinreichend bekannt.

Üblicherweise werden bei Asynchronmaschinen die Nuten bzw. soweit vorhanden die darinliegenden Kurzschlußstäbe des Rotors über ihre gesamte Länge und parallel zueinander um die Rotorachse verschränkt, weil hierdurch u.a. die Geräuschentwicklung erheblich reduziert wird. Dies hat zur Folge, daß die Signalstärke bei den Meßspulen der gewählten Art (diese sind im Vergleich zu den einleitend beschriebenen gesonderten Meßsonden verhältnismäßig groß) vermindert wird. Um dies zu verhindern, werden die Rotorstäbe hier nicht auf ihrer gesamten Länge, sondern nur partiell verschränkt. Zwar ist die erfindungsgemäße Vorrichtung grundsätzlich unabhängig von einer solchen Verschränkung der Nuten bzw. der Kurzschlußstäbe, doch kann eine signifikante Meßsignalverstärkung dadurch erfolgen, daß die Nuten bzw. die Kurzschlußstäbe nur über einen Teil ihrer Gesamtlänge verschränkt werden und im übrigen achsparallel zur Motorachse verlaufen. Dieser achsparallele Teil liegt vorzugsweise an einem Ende des Rotors und erstreckt sich bevorzugt über etwa ein Viertel der Gesamtlänge des Rotors.

Die Erfindung ist nachfolgend anhand eines in den Zeichnungen dargestellten Ausführungsbeispiels näher erläutert. Es zeigen:

Figur 1    ein stark vereinfachtes Ersatzschaltbild des maschinenseitigen Teils einer erfindungsgemäßen Vorrichtung,

Figur 2    ein Wicklungsschema für die Anordnung von insgesamt sechs Meßspulen am Stator,

Figur 3a    einen typischen Signalverlauf des Meßsignals einer Meßspulenanordnung nach dem Stand der Technik während einer Rotorumdrehung,

Figur 3b    einen typischen Signalverlauf des Meßsignals der erfindungsgemäßen Vorrichtung während einer Rotorumdrehung und

Figur 4    eine schematische Darstellung eines Kurzschlußrotors nach der Erfindung.

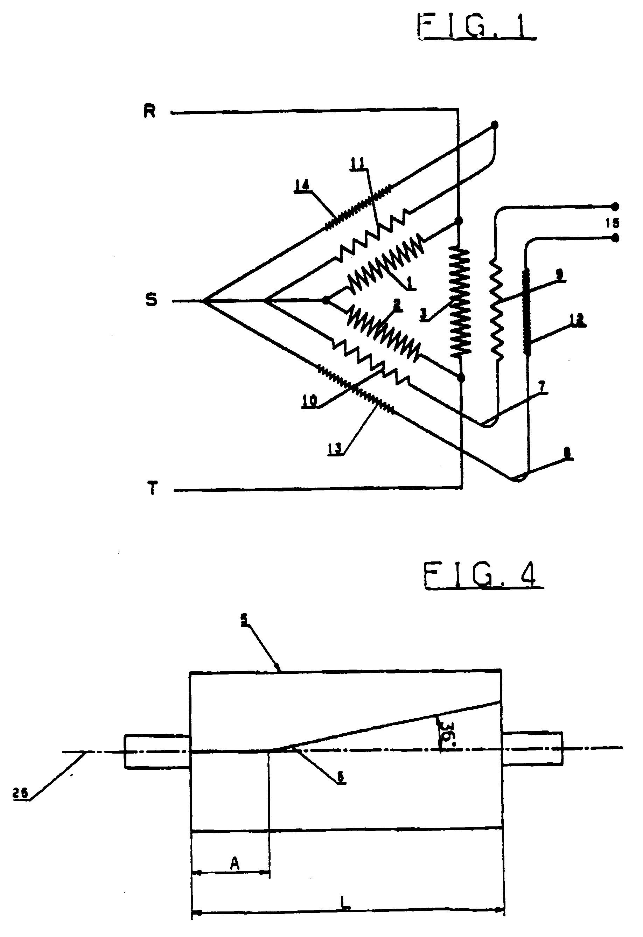

Wie sich aus dem Ersatzschalbild nach Figur 1 ergibt, zeigt das Ausführungsbeispiel einen als solchen bekannten Dreiphasenasynchronmotor, dessen Phasen in der Figur mit R, S und T bezeichnet sind. Diese Maschine weist insgesamt sechs Statorwicklungen 1, 2 und 3 auf, die paarweise zu Phasensträngen zusammengeschaltet sind und die in Nuten eines (nicht dargestellten) Stators liegen. Innerhalb des Stators ist ein Kurzschlußrotor 5 drehbar gelagert. Ein solcher mit in Nuten liegenden Kurzschlußstäben 6 versehener Kurzschlußrotor ist in Figur 4 beispielhaft dargestellt.

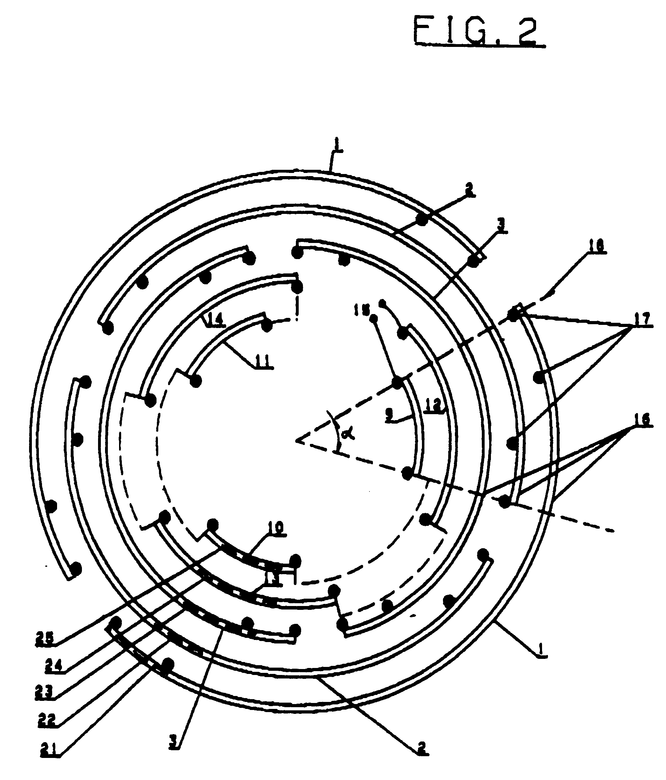

Neben den üblichen Statorwicklungen 1, 2 und 3 sind im Stator noch zwei Gruppen 7 und 8 von Meßspulen in Form von Meßwicklungen 9,10,11 und 12,13,14 angeordnet. Diese Meßwicklungen sind zusammen mit den Statorwicklungen in die Statornuten eingelegt worden, ihre Anordnung im einzelnen ergibt sich aus Figur 2. Die Meßwicklungen sind jeweils in ihrer Gruppe sowie auch gruppenweise in Reihe geschaltet, so daß das Meßsignal an den Klemmen 15 abgenommen werden kann.

Die Anordnung der Statorwicklungen 1, 2, 3 und der Meßwicklungen 9, 10, 11 sowie 12, 13, 14 im Stator ergibt sich aus Figur 2. In diesem Wicklungsschema ist die Anordnung der Statorwicklungen sowie der Meßwicklungen dargestellt, und zwar auf insgesamt fünf Schalen (konzentrischen Ringen) 21, 22, 23, 24, 25. Das Wicklungsschema zeigt die Anordnung der einzelnen Wicklungen in den Statornuten, wobei die Teilringe 16 die Wicklungsköpfe und die Punkte 17 die rotorachsparallelen Teile der jeweiligen Wicklungen, also die in den Nuten liegenden Wicklungsteile darstellen. Die auf einer gedachten radialen Linie (beispielhaft ist in Figur 2 eine solche Linie 18 eingezeichnet) liegenden Punkte 17 stellen die rotorachsparallelen Wicklungsteile dar, die in derselben Statornut liegen.

Die von außen gesehen ersten drei Schalen 21, 22, 23 stellen die drei Phasenwicklungen R, S und T dar, welche durch die Statorwicklungen 1, 2, 3 gebildet sind. Im vorliegenden Ausführungsbeispiel sind für jede Phase zwei Statorwicklungen vorgesehen, die jeweils wiederum in vier Nuten angeordnet sind, so daß sich jede Statorwicklung auf zwei Nutenpaare verteilt. Wie sich anhand der äußeren drei Schalen des Wicklungsschemas erkennen läßt, welche die Arbeitswicklungen darstellen, handelt es sich insoweit um eine übliche Dreiphasenasynchronmaschine.

Die inneren beiden Schalen 24, 25 kennzeichnen die beiden Gruppen 7, 8 von Meßwicklungen. Wie sich aus dem Wicklungsschema ergibt, liegen die Meßwicklungen in den selben Nuten, in denen auch die Statorwicklungen liegen. Die gestrichelten Verbindungen auf den inneren beiden Schalen (zwischen den Wicklungsköpfen 16) sollen verdeutlichen, wie diese insgesamt sechs Meßwicklungen 9, 10, 11 sowie 12, 13, 14 in Reihe geschaltet sind, nämlich derart, daß die Meßwicklungen 9, 10, 11 sowie 12, 13, 14 untereinander in Reihe und dann diese beiden Gruppen 7, 8 von Meßwicklungen ihrerseits wiederum in Reihe geschaltet sind. Dies ergibt sich auch aus dem Ersatzschaltbild nach Figur 1.

Die beiden Gruppen 7,8 von Meßwicklungen sind symmetrisch zueinander angeordnet. Mit $\alpha$ ist der Winkelabstand der rotorachsparallelen Wicklungsteile in Figur 2 bezeichnet, und zwar dargestellt anhand der Meßwicklung 9.

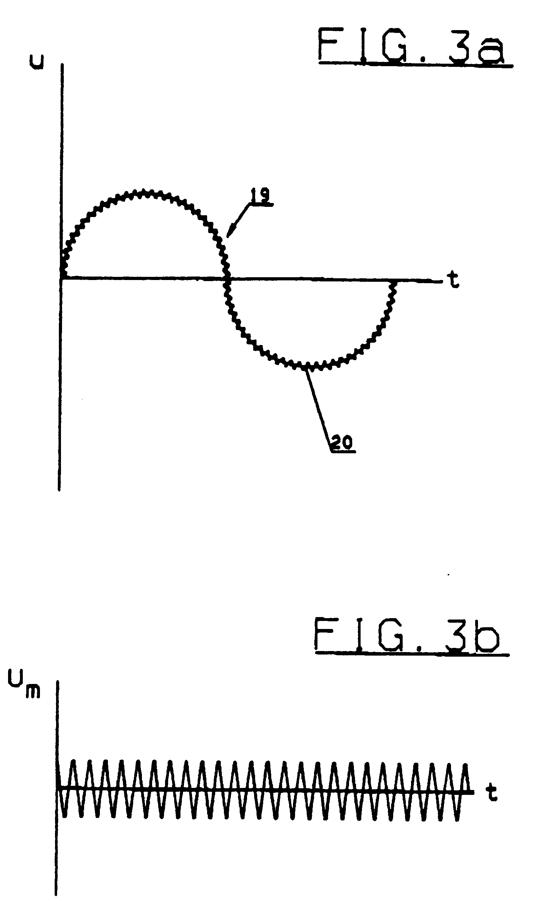

Figur 3a zeigt ein Meßsignal (Spannungsverlauf über der Zeit), das durch Induktion des sich drehenden Kurzschlußrotors in einer Meßspule, die in einer Statornut angeordnet ist, induziert wird (Stand der Technik). Dieses Signal weist eine Grundwelle (erste harmonische Schwingung) 19 und zahlreiche Oberwellen 20 auf. Aus diesem Signal müssen die Grundwelle 19 sowie ein Großteil der Oberwellen 20 ausgefiltert werden, um die Frequenz einer bestimmten Oberwelle und damit die Drehzahl des Rotors zu bestimmen.

Figur 3b zeigt ein Meßsignal, wie es bei der anhand der Figuren 1 und 2 vorbeschriebenen Anordnung an den Klemmen 15 abgreifbar ist. Bis auf eine vorbestimmbare Oberwelle sind sowohl die Grundwelle als auch alle übrigen Oberwellen unterdrückt, so daß durch Frequenzmessung dieses Signals praktisch ohne weitere Signalaufbereitung die Rotordrehzahl bestimmbar ist.

Eine hohe Meßsignalstärke und damit auch eine hohe Störsicherheit wird durch eine hohe Windungszahl der Meßwicklungen einerseits sowie durch eine nur teilweise Verschränkung der Rotorkurzschlußstäbe 6 andererseits erreicht, wie dies in Figur 4 anhand eines Kurzschlußstabes dargestellt ist. Der dort dargestellte Rotor 5 unterscheidet sich von den üblichen Rotoren dadurch, daß seine Kurzschlußstäbe 6 nur über einen Teil ihrer Gesamtlänge verschränkt, das heißt, in bezug auf die Rotorachse 26 verdreht sind. Der Verschränkungswinkel beträgt 36°. Die Verschränkung erstreckt sich über drei Viertel der Gesamtlänge L des Rotors. Über eine Länge A, die ein Viertel der Gesamtlänge L des Rotors entspricht, verlaufen die Kurzschlußstäbe parallel zur Rotorachse 26. Dieser rotorachsparallele Teil der Stäbe 6 liegt einheitlich am Anfang oder Ende der Stäbe 6.

**Patentansprüche**

1. Vorrichtung zur Drehzahlmessung einer Asynchronmaschine mit mindestens einer in Statornuten angeordneten Statorwicklung und einem Kurzschlußrotor mit Rotornuten (6), bei der die Rotordrehzahl durch ein durch Rotorrückwirkung in Meßspulen induziertes Signal ermittelt wird, dadurch gekennzeichnet, daß in den Statornuten eine Gruppe (7; 8) von um die Rotorachse (26) symmetrisch angeordneten und in Reihe geschalteten Meßspulen (9, 10, 11 ; 12, 13, 14) vorgesehen ist und daß die Zahl a der Rotornuten (6) zu der Zahl b der Meßspulen (9, 10, 11 ; 12, 13, 14) in der Beziehung

$$a = n \cdot b \pm 1$$

steht, wobei n eine ganze Zahl und größer als 1 ist.

2. Vorrichtung nach Anspruch 1, dadurch gekennzeichnet, daß die Meßspulen (9, 10, 11; 12, 13, 14) durch in den Statornuten angeordnete Meßwicklungen gebildet sind, die vorzugsweise zusammen mit der Statorwicklung (1, 2, 3) eingelegt sind.

3. Vorrichtung nach einem der vorhergehenden Ansprüche, dadurch gekennzeichnet, daß eine Meßwicklung (9, 10, 11, 12, 13, 14) durch mindestens zwei Statornuten geführt ist.

4. Vorrichtung nach einem der vorhergehenden Ansprüche, dadurch gekennzeichnet, daß eine weitere Gruppe (8) von in Reihe geschalteten Meßspulen (12, 13, 14) vorgesehen ist, die in Statornuten liegt und bezogen auf die Rotorachse (26), vorzugsweise auch auf die erste Meßspulengruppe (7) symmetrisch angeordnet und mit dieser in Reihe geschaltet ist, und die Meßspulenzahl der einen Meßspulengruppe (7 oder 8) ein ganzzahliges Ein- oder Vielfaches der Meßspulenzahl der anderen Meßspulengruppe ( 8 oder 7) ist.

5. Vorrichtung nach einem der vorhergehenden Ansprüche, dadurch gekennzeichnet, daß der Winkel α zwischen den sich Längsrichtung des Motors ersteckenden Wicklungsteilen einer jeden Meßwicklung (9,10,11,12,13,14) so gewählt ist, daß die zur Drebzahlmessung unerwünschten Oberwellen 20 des in den Meßspulen induzierten Signals weitgehend unterdrückt und die gewünschte Oberwelle verstärkt sind.

6. Vorrichtung nach einem der vorhergehenden Ansprüche, dadurch gekennzeichnet, daß die Nuten (6) des Rotors (5) nur über einen Teil (L - A) ihrer Gesamtlänge (L) verschränkt, im übrigen etwa parallel zur Rotorachse (26) verlaufen.

7. Vorrichtung nach einem der vorhergehenden Ansprüche, dadurch gekennzeichnet, daß der achsparallele Teil der Nuten (6) am Ende des Rotors (5) angeordnet ist.

8. Vorrichtung nach einem der vorhergehenden Ansprüche, dadurch gekennzeichnet, daß das Verhältnis der Länge des achsparallelen Teils A der Nuten zur Gesamtlänge L des Rotors (5) in folgenden Grenzen

0,2 ≤ A/L ≤ 0,3

vorzugsweise im Bereich von etwa 0,25 liegt.

9. Vorrichtung nach einem der vorhergehenden Ansprüche, dadurch gekennzeichnet, daß die Windungszahlen der Meßspulen (9,10,11;12,13,14) der Spulengruppen (7,8) derart gewählt sind, daß gewünschte Oberwellen verstärkt und unerwünschte Oberwellen (20) unterdrückt werden.

**Claims**

1. Device for measuring the speed of an asynchronous machine having at least one stator winding arranged in stator grooves and a short-circuit rotor with rotor grooves (6), in which the rotor speed is determined by means of a signal induced in measuring coils by rotor retroaction, characterised in that a group (7; 8) of measuring coils (9, 10, 11; 12, 13, 14) connected in series and arranged symmetrically about the rotor axis (26) is provided in the stator grooves, and in that the number a of rotor grooves (6) to the number b of measuring coils (9, 10, 11; 12, 13, 14) is in the relationship

$$a = n \cdot b \pm 1$$

n being a whole number and greater than 1.

2. Device according to claim 1, characterised in that the measuring coils (9, 10, 11; 12, 13, 14) are formed by measuring windings arranged in the stator grooves and which are preferably inserted together with the stator winding (1, 2, 3).

3. Device according to one of the preceding claims, characterised in that a measuring winding (9, 10, 11, 12, 13, 14) is guided by at least two stator grooves.

4. Device according to one of the preceding claims, characterised in that a further group (8) of measuring coils (12, 13, 14) connected in series is provided, which lies in stator grooves and, relative to the rotor axis (26), is arranged symmetrically preferably also on the first measuring coil group (7) and connected in series with the latter, and the number of measuring coils of one group (7 or 8) of measuring coils is a whole number equal to or a multiple of the number of measuring coils in the other group of measuring coils (8 or 7).

5. Device according to one of the preceding claims, characterised in that the angle α between winding parts of each measuring winding (9, 10, 11, 12, 13, 14) extending in the longitudinal direction of the motor is selected so that the harmonic waves 20 of the signal induced in the measuring coils, and which are not required for measurement of speed, are largely suppressed and the required harmonic wave is amplified.

6. Device according to one of the preceding claims, characterised in that the grooves (6) of rotor (5) are crossed only over a part (L - A) of their total length (L), moreover they extend approximately parallel to the rotor axis (26).

7. Device according to one of the preceding claims, characterised in that the part of the grooves (6) which is parallel to the axis, is arranged on the end of the rotor (5).

8. Device according to one of the preceding claims, characterised in that the ratio of the length of the part A of the grooves which is parallel to the axis to the total length L of the rotor (5) lies within the following limits

$$0.2 \leq A/L \leq 0.3$$

preferably in the region of about 0.25.

9. Device according to one of the preceding claims, characterised in that the number of windings in the measuring coils (9, 10, 11; 12, 13, 14) of the coil groups (7, 8) are selected such that required harmonic waves are amplified and harmonic waves (20) which are not required are suppressed.

**Revendications**

1. Dispositif pour mesurer la vitesse de rotation d'une machine asynchrone, comportant au moins un enroulement statorique disposé dans des encoches du stator, et un rotor de court-circuit comportant des encoches (6), et dans lequel la vitesse de rotation du rotor est déterminée par un signal induit dans des bobines de mesure sous l'effet d'une réaction du rotor, caractérisé par le fait qu'un groupe (7;8) de bobines de mesure (9,10,11;12,13,14), qui sont disposées symétriquement autour de l'axe (26) du rotor et sont branchées en série, est prévu dans les encoches du stator et que le nombre a des encoches (6) du rotor est lié au nombre des bobines de mesure (9,10,11;12,13,14) conformément à la relation :

$$a = n \cdot b \pm 1$$

n étant un nombre entier supérieur à 1.

2. Dispositif selon la revendication 1, caractérisé en ce que les bobines de mesure (9,10,11;12,13,14) sont formées par des enroulements de mesure disposés dans les encoches du stator et qui sont insérés de préférence conjointement avec l'enroulement statorique (1,2,3).

3. Dispositif selon l'une des revendications précédentes, caractérisé en ce qu'un enroulement de mesure (9,10,11,12,13,14) s'étend au moins dans deux encoches du stator.

4. Dispositif selon l'une des revendications précédentes, caractérisé en ce qu'il est prévu un second groupe (8) de bobines de mesure (12,13,14) branchées en série, qui est disposé dans les encoches du stator et ce symétriquement par rapport à l'axe (26) du rotor, de préférence également par rapport au premier groupe (7) de bobines de mesure, et est branché en série avec ce groupe, et le nombre des bobines de mesure d'un groupe de bobines de mesure (7 ou 8) est égal au nombre des bobines de mesure de l'autre groupe de bobines de mesure (8 ou 7) ou à un multiple entier de ce nombre.

5. Dispositif selon l'une des revendications précédentes, caractérisé en ce que l'angle $\alpha$ entre les parties, qui s'étendent dans la direction longitudinale du moteur, de chaque enroulement de mesure (9,10,11,12,13,14) est choisi de telle sorte que les harmoniques (20), qui sont indésirables pour la mesure de la vitesse de rotation, du signal induit dans les bobines de mesure sont éliminés dans une large mesure et que les harmoniques désirés sont intensifiés.

6. Dispositif selon l'une des revendications précédentes, caractérisé en ce que les encoches (6) du rotor (5) s'étendent d'une manière limitée uniquement sur une partie (L - A) de la longueur totale (L) du rotor, mais par ailleurs approximativement parallèlement à l'axe (26) du rotor.

7. Dispositif suivant l'une des revendications précédentes, caractérisé par le fait que la partie, qui est parallèle à l'axe, des encoches (6) est disposée sur l'extrémité du rotor (5).

8. Dispositif selon l'une des revendications précédentes, caractérisé en ce que le rapport de la longueur de la partie (A) des encoches, parallèle à l'axe, à la longueur totale (L) du rotor (5) se situe dans les limites suivantes :

$$0,2 \leq A/L \leq 0,3$$

et de préférence au voisinage d'environ 0,25.

9. Dispositif selon l'une des revendications précédentes, caractérisé en ce que les nombres de spires des bobines de mesure (9,10,11;12,13,14) des groupes de bobines (7,8) sont choisis de telle sorte que les harmoniques désirés sont intensifiés et les harmoniques indésirables (20) sont supprimés.

EP 0 503 515 B1

# FIG. 1

# FIG. 4

8

# FIG. 2

FIG. 3a

FIG. 3b